Europäisches Patentamt

European Patent Office

Office européen des brevets

(11) Publication number : **0 207 973**
**B1**

(12) **EUROPEAN PATENT SPECIFICATION**

(45) Date of publication of patent specification :
05.04.89

(51) Int. Cl.⁴ : **B 29 B 17/00**, B 02 C 19/14

(21) Application number : 86900637.9

(22) Date of filing : 06.01.86

(86) International application number :
**PCT/NL 86/00001**

(87) International publication number :
**WO/8604014 (17.07.86 Gazette 86/17)**

(54) AN APPARATUS FOR THE DESTRUCTION OF PLASTIC CONTAINERS, SUCH AS BOTTLES.

(30) Priority : 04.01.85 NL 8500016

(43) Date of publication of application :
14.01.87 Bulletin 87/03

(45) Publication of the grant of the patent :
05.04.89 Bulletin 89/14

(84) Designated contracting states :
AT BE CH DE FR GB IT LI LU NL SE

(56) References cited :
FR--A-- 2 169 470
US--A-- 305 897
US--A-- 4 253 206
US--A-- 4 402 123

(73) Proprietor : SMS MECHANICAL SYSTEMS B.V.
Ambachtsstraat 4
NL-7122 MP Aalten (NL)

(72) Inventor : VAN GEMERT, Hendrikus Theodorus
Stationsweg 365
NL-3925 CB Scherpenzeel (NL)
Inventor : MENGER, Jan Willem
11 Hof
NL-3958 CH Amerongen (NL)

(74) Representative : Smulders, Theodorus A.H.J. et al
Vereenigde Octrooibureaux Nieuwe Parklaan 107
NL-2587 BP 's-Gravenhage (NL)

## Description

This invention relates to an apparatus for the destruction of plastic containers, such as beverage bottles and the like, said containers being provided with a neck for receiving a closure, said apparatus being fitted with a frame having a pair of rollers rotatably supported therein, each of said rollers having a recess in its surface.

Such an apparatus is known from Austrian patent 305,897. This known apparatus comprises rollers having transport teeth which, upon rotation of the rollers, engage, depress, and reduce or cut up a plastic container. For a proper introduction of the containers, there are provided recesses by the omission of one or more teeth ribs.

A first drawback of the known apparatus is that the apparatus is not adapted for reducing or cutting up particular containers, such as bottles, so that no optimum reduction or cutting up is obtained. A second drawback is that the known apparatus cannot be operated by anyone, since the operation of the apparatus is comparatively complicated. A third drawback is that the known apparatus, in particular when used by a non-instructed person, is not optimally safe. In particular in multiple stores, wine and spirit shops and the like, there is a need for an apparatus with which anyone offering empty plastic containers and especially empty bottles, can reduce or cut up the same himself in a safe manner.

It is an object of the present invention to remove these drawbacks and to provide an apparatus for the destruction of plastic containers, in particular bottles, which can be operated by anyone in a simple manner and without any danger.

To that end, according to the present invention, an apparatus of the above described type is characterized in that each roller is rotatably journalled about a shaft rotatable in the frame, that the recesses together form a space for receiving the neck and the adjoining part of the container, that there is provided at least one detection member that extends into said space, comprising an arm affixed to one of the shafts and conducted through a radial recess in the roller placed on said shaft, the arm end extending into said space being slightly rotatable by the container portion introduced into the space relatively to the roller from a stationary rest position, that the drive of the rollers is controllable in dependence on the rotated position of the respective detection member, and that there are provided members that reverse the respective detection member into the stationary rest position and retain the same therein when no container is present in the apparatus.

A container or bottle, in the apparatus according to the present invention, can be introduced without any problem between the rollers by placing the container or bottle with the neck in the recess forming a space for the neck. The different plastic bottles in general have a standard bottle neck, so that, due to a design of the recess tuned thereto, it is possible to prevent bottles having a different form, and in particular of a different material, from being processed and to preclude contamination of the raw materials. The apparatus is very simple to operate. The only necessary step is to place the neck in the recess in such a manner that the at least one detection member is swivelled out of the rest position to a sufficient extent. Since each detection member is incorporated in a roller and projects slightly outwardly only in the roller gap, there is obtained a compact construction which, moreover, is very safe, since the detection members are accessible by means of an elongate article only and the apparatus can therefore not be activated accidentially.

It is recommendable to incorporate a detection arm in each of the rollers, both arms having a nose profile in such a manner that the nose profile of the one arm detects the open end edge of the neck, and the nose profile of the other arm detects its collar. Both detection arms, consequently, should be rotated over a limited distance before the roller can be activated.

For the sake of completeness, we observe that FR-A-2,169,470 also discloses per se an apparatus for the destruction of plastic containers, such as beverage bottles and the like, said containers being provided with a neck for receiving a closure, said apparatus being fitted with a frame having a pair of rollers rotatably supported therein. Further similarities with the apparatus according to the present invention are lacking, however.

In a preferred embodiment the apparatus is distinguished in that each roll is rotatably journalled around a shaft rotatable in the frame, each detection organ being formed by at least one arm fixed to a shaft and passing through a radial opening. Thus the apparatus becomes particularly compact, since the detection means are incorporated in the rollers.

It is preferable to locate a detection arm in each of the rollers, each arm being given a profiled tip, such that the tip of one arm detects the open end edge of the neck, and that of the other arm detects the collar of the neck. Both arms therefore have to be moved through a short distance before the rollers can come into operation.

Each roller preferably has a shell which is roughened, for example by means of axially aligned teeth or ribs. By these means the bottle material is repeatedly locally stretched, whereby the bottles will retain their crushed shape after treatment.

Each of the rollers can, according to the invention, be provided with a cutting organ, the cutting organs of the two rollers cooperating, whereby a so-called flying cutter is obtained. This cutter cuts each bottle in two, or separates the usable parts from the unusable parts.

These and other characteristics of the invention are further explained in the description with drawings, below.

In the drawings :

Figure 1 shows an axial cross-section of the pair of rollers equipped with detection means.

Figure 2 shows a radial cross-section of the rollers of figure 1 along line II-II.

In the drawings, 1 indicates the frame, which is here drawn merely as two parallel plates, which are obviously joined together by cross members, plates, etc. not shown. Each plate has a bearing bush 2, in which a shaft 3 is rotatably mounted. The two shafts 3 run parallel to one another, and each serves as a support for a roller 5, rotatably mounted with respect to the shaft via bearing bushes 4. Next to each roller, coaxially therewith, there is fitted a gear wheel, also rotatably around shaft 3, the gear wheels 6 of the respective shafts 3 engaging with one another. One of the gear wheels 6 also engages with a gear wheel 7 of a driving shaft 8, which is supported in one of the frame plates 1 by a bearing 9. Driving shaft 8 is turned via a coupling gear or transmission 10, via an input shaft 11 (not shown).

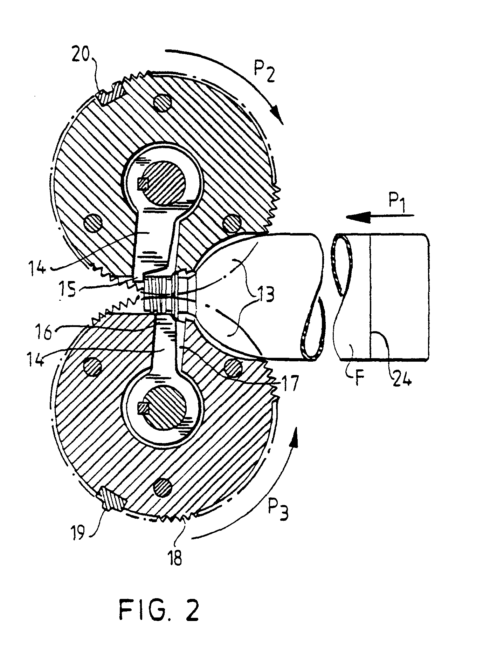

As is apparent from figure 2, each roller has a recess 13 in its shell surface, which recess consists of two parts, namely a cylindrical part perpendicular to the axial direction of shaft 3 and a part widened in relation thereto. The two recesses 13 together form a space for accommodating a plastic bottle F in figure 2.

The roller 5 consists, in fact, of two adjacently arranged discs, whereof the central drilling for accommodating the bearing bush 4 is widened at one flat surface, which widened drillings of the two discs, arranged facing one another, accommodate a detector arm 14. Each detector arm 14 has a profiled tip, 15 and 16 respectively, which projects into space 13. Arm 14 is, to a limited extend, pivotable with respect to roller 5, on account of channel 17, leading from the widened drilling in roller 5 to the recess 13 in the shell thereof, being wider than the thickness of arm 14.

The shell surface of rollers 5 is provided with ribs or teeth 18 aligned parallel to shafts 3. At a certain circumferential distance from recesses 13 or detector arms 14, there are also fitted in the shell cutting organs 19 and 20 respectively, thus creating a flying cutter.

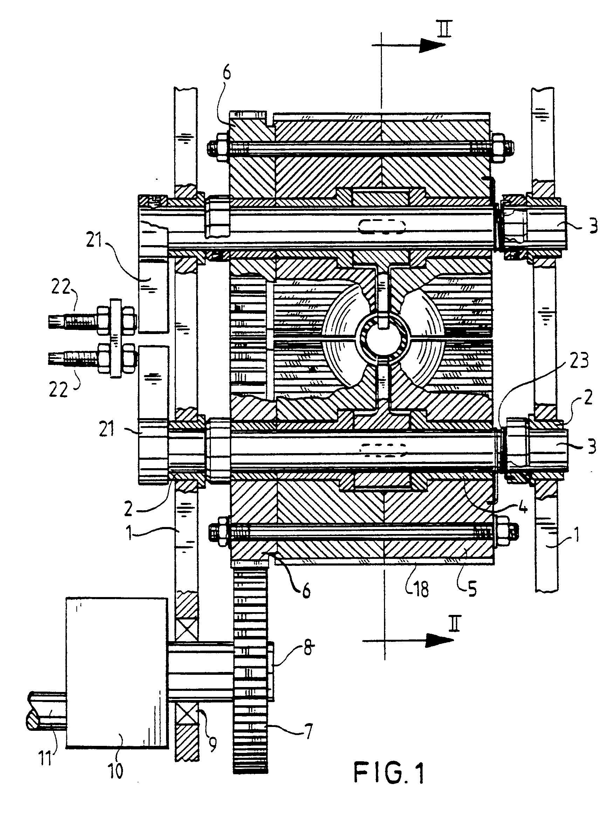

Both shafts 3 are extended past frame 1 at the left in figure 1 and are each provided with an arm 21, the arms pointing towards one another in the neutral position of the apparatus. The free end of each arm 21 is situated in the sensing region of a proximity switch 22, which serves to control the driving of shaft 11. This control mechanism falls, further, outside the scope of this invention, and is therefore not further described. This control requirement can obviously be met in any known way.

Finally, a pretensioning spring 23, in the form of a helical spring, is operative between each shaft 3 and the respective roller 5, so arranged that detector arm 14 is prestressed in the direction of the enlarged part of recess 13.

The above described apparatus works as follows :

A bottle F, of plastic, which is indicated schematically in figure 2, usually has a standard neck construction, that is a cylindrical part with a screw thread and collar. The distance between the open edge of the neck and its collar is always a fixed dimension. When bottle F is introduced into the space formed by recesses 13 in the shell surfaces of rollers 5 (see arrow P1), the leading edge of the neck pushes the upper detector arm 14 in figure 2 in a clockwise direction, while the collar of the neck pivots the lower arm 14 in an anticlockwise direction. Through this pivoting action, each shaft 3, as well as the arm 21 fastened thereto, undergoes a pivoting movement. The free end parts of these arms 21 move out of rang of proximity switches 22, so that the drive for shaft 11 is enabled. Shaft 11 is rotated, and consequently shaft 8, which brings gear wheel 7 into rotary movement. Since the said gear wheel is in engagement with both gear wheels 6, these latter gear wheels 6 rotate rollers 5 around shafts 3. Although the shell surfaces of the two rollers are not in an engaged state. the two rollers 5 will synchronously turn in the direction of arrows P2 and P3 respectively, whereby plastic bottle F is drawn between the rollers in the direction of arrow P1 and, at the same time, crushed. The ribs 18 on the roller shell strongly deform and stretch the material of the bottle, whereby the bottle will ultimately retain its crushed form. Finally, the cutting organs 19 and 20 cut away the bottom part 24 of the bottle, which bottom part is not usually suitable for recycling.

As soon as the rollers have turned once and the bottle has disappeared in the pinch between the rollers, springs 23 ensure that detector arms 14 are returned to their starting position in respect of the rollers, so that these detector arms are again ready for detecting. The whole cycle is finished as soon as the free ends of arms 21 reach proximity switches 22, whereby the drive is stopped. The apparatus is then ready for a repetition of the cycle.

Obviously, the invention is not restricted to the above described embodiment. Thus the drive can be a completely different one from the shown geared drive. The detection means to not have to be mounted centrally within the rollers, but could also be embodied in another way, for example electronically.

## Claim

An apparatus for the destruction of plastic containers, such as beverage bottles and the like, said containers being provided with a neck for receiving a closure, said apparatus being provided with a frame having a pair of rollers rotatably supported therein, each of said rollers having a recess in its surface, characterized in that each roller (5) is rotatably journalled around a shaft (3) rotatable in the frame (1), that the recesses (13) together form a space for receiving the neck and the adjoining part of the container (F), that at least one detection member (14, 15 ; 14, 16) extending into the space is provided, comprising an arm (14) affixed to one of the shafts and passing through a radial recess (17) in the roller placed on said shaft, the arm end (15, 16) extending into said space being slightly rotatable relatively to the roller by the container portion introduced into the space from a stationary rest position, that the drive of the rollers is controllable in dependence on the rotated position of the respective detection member, and that there are provided members that reverse the respective detection member into the stationary rest position and retain the same therein when no container is present in the apparatus.

## Patentanspruch

Vorrichtung zum Vernichten von Kunststoffbehältern, wie beispielsweise Trinkflaschen oder dergleichen, welche mit einem Hals zur Aufnahme eines Verschlusses versehen sind, wobei die Vorrichtung einen Rahmen aufweist, in dem ein Paar Walzen drehbar gelagert sind, wobei jede der Walzen in ihrer Oberfläche eine Ausnehmung besitzt, dadurch gekennzeichnet, daß jede Walze (5) rotierbar um eine in dem Rahmen (1) drehbare Welle (3) gelagert ist, daß die Ausnehmungen (13) zusammen einen Raum zur Aufnahme des Halses und des anschließenden Abschnitts des Behälters (11) bilden, daß wenigstens ein sich in den Raum erstreckendes Fühlerelement (14, 15 ; 14, 16) vorgesehen ist, das einen Arm (14) aufweist, der an einem der Wellen angebracht ist und durch eine radiale Ausnehmung (17) in der auf der Welle angeordneten Walze tritt, wobei die Armenden (15, 16), die sich in den Raum erstrecken, aus einer stationären Ruhestellen geringfügig relativ zu der Walze mittels des in den Raum eingeführten Behälterabschnitts drehbar sind, daß der Antrieb der Walzen abhängig von der Drehstellung der entsprechenden Fühlerelemente steuerbar ist, und daß Elemente vorgesehen sind, die das entsprechende Fühlerelement in die stationäre Ruhestellung zurückführen und darin halten, wenn in der Vorrichtung kein Behälter vorhanden ist.

## Revendication

Appareil pour la destruction de récipients en plastique, tels que bouteilles pour boisson et analogues, lesdits récipients présentant un goulot de réception d'une fermeture, ledit appareil comportant un bâti dans lequel tourillonnent deux rouleaux, chacun desdits rouleaux présentant un évidement dans sa surface, caractérisé en ce que chaque rouleau (5) tourillonne autour d'un arbre (3) tourillonnant lui-même dans le bâti, en ce que les évidements (13) délimitent conjointement un espace de réception du goulot et de la partie attenante du récipient (F), en ce qu'il est prévu au moins un organe de détection (14, 15, 14, 16) qui pénètre dans ledit espace, comprenant un bras (14) fixé à l'un des arbres et traversant un évidement radial (17) du rouleau placé sur ledit arbre, l'extrémité du bras (15, 16) pénétrant dans ledit espace et pouvant tourner légèrement, sous l'effet de la partie de récipient introduite dans ledit espace, par rapport au rouleau à partir d'une position de repos fixe, en ce que l'entraînement des rouleaux est réglable en fonction de la position de rotation prise par l'organe de détection respectif, et en ce qu'il est prévu des organes qui ramènent l'organe de détection respectif dans la position de repos fixe et l'y retiennent lorsqu'aucun récipient n'est présent dans l'appareil.

FIG.1

FIG. 2